# EUROPEAN PATENT SPECIFICATION

(11) **EP 1 035 905 B1**
(45) Date of publication and mention of the grant of the patent: **18.06.2003**
(21) Application number: 98938831.9
(22) Date of filing: 17.08.1998
(51) Int. Cl.: B01D 53/32, B01J 19/08, B01D 53/86, B01D 53/94, F01N 3/28

(54) **SUBSTRATE MEDIA FOR PLASMA GAS PROCESSING REACTORS**
SUBSTRAT FÜR PLASMA-GASREAKTOREN
MATERIAU DE SUBSTRAT POUR REACTEURS DE TRAITEMENT DES GAZ A PLASMA

(30) Priority: 09.09.1997 GB 9718968
(43) Date of publication of application: 20.09.2000
(73) Proprietor: Accentus plc, Didcot, Oxfordshire OX11 0QJ (GB)
(72) Inventor: SEGAL, David, Leslie, Abingdon, Oxfordshire OX14 3AB (GB); SHAWCROSS, James, Timothy, Charlbury, Oxforshire OX7 3TN (GB)
(74) Representative: Lofting, Marcus John
(86) International application number: GB9802458
(87) International publication number: WO99012637

(56) References cited:
- WO-A-91/03315
- GB-A- 2 274 412
- US-A- 3 983 021
- US-A- 5 609 736

## Description

The present invention relates to gas processing reactors in which a gaseous medium to be processed is subjected to the action of a plasma in the presence of a ceramic substrate material which acts to enhance the generation and maintenance of the plasma, and specifically to such reactors for the removal of noxious combustion products from the exhaust gases of internal combustion engines.

One such reactor, which is intended to remove pollutants from air so as to render it breathable, is shown in US patent 3 983 021 and another, which is intended for use in the purification of internal combustion engine exhaust emissions is shown in our earlier patent GB 2 274 412. In the former reactor, the substrate consists of a bed of pellets made of alumina, silica or zirconia. In the latter reactor, the substrate consists of pellets of a heat-resisting ferro-electric material such as barium titanate.

Specification US 5,609,736 discloses a reactor for the treatment of the exhaust gases from internal combustion engines, which includes a bed of pellets of a dielectric material which is coated with a metal oxide catalytic material. However, no mention is made of the presence of a binder.

Specification WO91/03315 discloses a reactor for the purification of air, which includes a bed of pellets of a dielectric material. However, the prime purpose of the pellets is to increase the residence time in the reactor of air to be purified. The purification of the air is carried out primarily by the action of a plasma established in the air as it passes through the reactor.

It has been proposed (European Patent Application 0 786 283) that a mixture of titania and zeolites should be used in paving stones to give them a capability for removing NOₓ from urban roads. However, there is no evidence that such an effect occurs at the temperatures and in the environments concerned.

It is an object of the present invention to provide an improved substrate material suitable for use in plasma activated reactors for the processing of gaseous materials, specifically, the removal of NOₓ and carbonaceous particulates therefrom.

According to the present invention there is provided a plasma enhanced reactor for the processing of gaseous media, including a gas permeable bed of active material, means for constraining a gaseous medium to be processed to pass through the bed of active material and means for applying across the bed of active material a potential difference sufficient to establish a gaseous discharge in the gaseous medium in the interstices in the bed of active material characterised in that the bed of active material comprises an agglomeration of particles each of which includes a dielectric mixed metal oxide material, defined as a compound of oxygen with two or more metals adapted to facilitate the processing of the gaseous medium and at least ten weight per cent of a binder consisting of alumina also adapted to facilitate the processing of the gaseous medium.

Thus preferably, the substrate particles are composed of materials selected from the group comprising barium titanate, calcium titanate, zeolites, and a mixture of zeolite with titania.

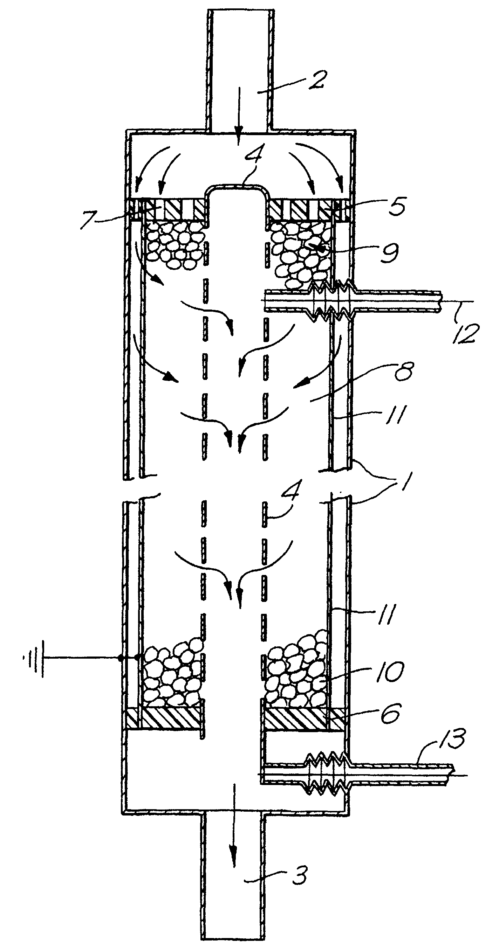

Embodiments of the invention will now be described, by way of example with reference to the accompanying drawing which is a longitudinal section of a schematic plasma reactor for the purification of the exhaust emissions from an internal combustion engine.

Referring to the drawing, a plasma reactor for removing particulate carbonaceous and other combustion products and simultaneously controlling or removing NOₓ from the exhaust of an internal combustion engine, consists of a cylindrical stainless steel chamber 1, which is arranged to be connected to an earthing point (not shown) and which has an inlet nozzle 2 by means of which it can be connected to the exhaust system of an internal combustion engine, and a similar outlet nozzle 3. Mounted coaxially within the chamber 1 are perforated electrodes 4 and 11 of stainless steel. Inner electrode 4, is connected via high tension lead through connectors 12, 13 to a source of high potential, again not shown in the drawing. The electrodes 4 and 11 are supported in the chamber 1 by means of insulating supports 5 and 6. The upstream end of the inner electrode 4 is closed off and the adjacent support 5 has a number of axial holes 7 in it so as to render it gas permeable with as little back pressure as is practicable. The other support, 6, is impermeable. Thus exhaust gases are constrained to pass radially as well as axially, through the space 8 between the outer electrode 11 and the inner electrode 4. As indicated by the arrows some exhaust gas passes directly axially into the space 8 whilst some initially passes into the space between the wall of the chamber 1 and the outer electrode 11, then flowing radially through the latter into the space 8. The electrodes 4 and 11 and the supports 5 and 6 also act to retain a bed 9 of pellets 10 in the space 8 between the outer electrode 11 and the inner electrode 4. In use, the high potential applied across the electrodes 4 and 11 is such as to excite a non-thermal plasma in the exhaust gases in the interstices between the pellets 10. A convenient potential for this purpose is a potential of about 10 kV to 30 kV which may be a regularly pulsed direct potential or a continuously varying alternating potential, or may be an interrupted continuous direct potential. Typically we employ a potential of 20 kv per 30 mm of bed depth.

The pellets 10 are made of a mixture of oxide materials such as alumina and barium titanate, or alumina and calcium titanate, or alumina and a zeolite, or alumina and titania and a zeolite, or titania and a zeolite. The close proximity of the different metal oxides in the pellets 10 enhances their activity in relation to the NOₓ and other components of diesel exhaust emissions in particular compared with a bed of pellets made of either single metal oxide materials or a mixture of pellets of single metal oxide materials.

Specific examples are illustrated in Table 1 and Table 2 comprising respectively barium titanate/gamma-alumina and calcium titanate/gamma-alumina extrudates at 4 mm diameter, in which the gamma alumina serves as both active constituent and binder. The barium titanate and calcium titanate powders from which these mixed oxide extrudates were produced had permittivities of respectively 1410 (barium titanate) and 155 (calcium titanate) measured at 25°C and 1 kHz.

The use of active alumina in the gamma alumina form as a binder provides beneficial effects, as for example when used in a ferroelectric bed reactor for the removal of NOₓ from diesel exhausts. Thus, for example:

The strength of the extrudates can be adjusted by varying the amount of alumina binder. It is considered that a minimum alumina content in the region of 15% is required for sufficient practical strength, but the amount of binder may be in the range 20 to 50 per cent by volume.

Wear resistance of the extrudates can be increased by varying the amount of binder. A bed consisting of two or more materials in the form of separate beads or fragments may exhibit preferential wear of one component leading to dust formation when in use.

Although the examples described here involve two components (e.g. barium titanate and alumina) the use of binder would allow extrudates to be produced from more than two components for example extrudates from mixed titanate/alumina/zeolite powders. Because components are uniformly distributed within each extrudate the use of a bed of extrudates consisting of mixed powders avoids or reduces the effect of preferential settling of a component as is found to occur when a bed consists of a mixture of beads or fragments of different materials, for example barium titanate fragments and alumina beads.

Extrudates are generally less expensive to produce than spheres and cost savings can arise when producing extrudates of mixed materials.

The γ-alumina binder can contribute a beneficial chemical effect during operation of the bed in addition to its role as a binder and aid NOₓ removal from the diesel exhaust stream.

When a ferroelectric component such as barium titanate is used, varying the amounts of alumina binder allows a control of the permittivity of the extrudates.

If an extrudate of α-alumina and γ-alumina binder is produced then the extrudate will contain regions of differing surface chemistry. Thus the α-alumina has a basic surface chemistry while the binder is likely to have a more acidic surface. The presence of differing surface acidity/basicity in each extrudate is considered to affect the efficiency for removal of NOₓ.

Incorporation of alumina binder into the extrudates allows a control of extrudate porosity compared to use of separate beads or fragments of for example alumina and a titanate.

**Table 1**

| Properties of barium titanate:γ-alumina extrudates | | | |
|---|---|---|---|
| Composition | Density g cm⁻³ | Surface area m²g⁻¹ | Pore volume cm³g⁻¹ |
| BaTiO₃: 22 wt% γ-Al₂O₃ | 1.32 | 72 | 0.32 |
| BaTiO₃: 50 wt% γ-Al₂O₃ | 1.02 | 137 | 0.39 |

**Table 2**

| Properties of calcium titanate:γ-alumina extrudates | | | |
|---|---|---|---|
| Composition | Density g cm⁻³ | Surface area m²g⁻¹ | Pore volume cm³g⁻¹ |
| CaTiO₃: 22 wt% γ-Al₂O₃ | 0.93 | 84 | 0.30 |
| CaTiO₃: 50 wt% γ-Al₂O₃ | 0.90 | 140 | 0.35 |

## Claims

1. A reactor for the plasma enhanced processing of gaseous media, including a gas permeable bed (9)of active material (10), means (4, 5, 6, 7) for constraining a gaseous medium to be processed to pass through the bed (9) of active material (10) and means (12, 13) for applying across the bed (9) of active material (10) a potential difference sufficient to establish a gaseous discharge in the gaseous medium in the interstices in the bed (9) of active material **characterised in that** the bed (9) of active material (10) comprises an agglomeration of particles (10) each of which includes a dielectric mixed metal oxide material defined as a compound of oxygen with two or more metals adapted to facilitate the processing of the gaseous medium and at least ten weight per cent of a binder consisting of alumina also adapted to facilitate the processing of the gaseous medium.

2. A reactor according to Claim 1 **characterised in that** the particles (10) include a third metal oxide component.

3. A reactor according to Claim 1 or Claim 2 **characterised in that** the particles (10) are composed of materials selected from the group comprising barium titanate, calcium titanate, zeolites, and a mixture of zeolite with titania.

4. A reactor according to Claim 3 **characterised in that** the alumina is γ-alumina.

5. A reactor according to Claim 3 or Claim 4 **characterised in that** the particles (10) are composed of alumina and barium titanate.

6. A reactor according to Claim 3 or Claim 4 **characterised in that** the particles (10) are composed of alumina and calcium titanate.

7. A reactor according to Claim 3 or Claim 4 **characterised in that** the particles (10) are composed of alumina, titania and a zeolite.

8. A reactor according to any preceding Claim **characterised in that** the amount of binder in the particles (10) lies in the range 20 to 50 per cent by volume.

9. A reactor according to any preceding claim **characterised in that** it is adapted to form part of the exhaust system of an internal combustion engine.

## Patentansprüche

1. Reaktor für die durch Plasma-Verarbeitung gasförmiger Medien, umfassend ein gasdurchlässiges Bett (9) aus aktivem Material (10), Vorrichtungen (4, 5, 6, 7), um ein zu verarbeitendes gasförmiges Medium dazu zu zwingen, durch das Bett (9) aus aktivem Material (10) zu fließen, und Vorrichtungen (12, 13) zum Anlegen einer ausreichenden Spannungsdifferenz, um in den Zwischenräumen des Bettes (9) aus aktivem Material eine Gasentladung im gasförmigen Medium auszulösen, **dadurch gekennzeichnet, dass** das Bett (9) aus aktivem Material (10) eine Ansammlung von Teilchen (10) aufweist, von denen jedes ein dielektrisches Material aus einem gemischten Metalloxid, definiert als Verbindung von Sauerstoff mit zwei oder mehreren Metallen, das darauf ausgelegt ist, die Verarbeitung des gasförmigen Mediums zu erleichtern, und mindestens 10 Gew.-% eines Bindemittels aus Aluminiumoxid, das ebenfalls darauf ausgelegt ist, die Verarbeitung des gasförmigen Mediums zu erleichtern.

2. Reaktor nach Anspruch 1, **dadurch gekennzeichnet, dass** die Teilchen (10) eine dritte Metalloxidkomponente umfassen.

3. Reaktor nach Anspruch 1 oder 2, **dadurch gekennzeichnet, dass** die Teilchen (10) aus Materialien, ausgewählt aus der Bariumtitanat, Calciumtitanat, Zeolithen und einem Gemisch aus Zeolith mit Titandioxid umfassenden Gruppe, zusammengesetzt sind.

4. Reaktor nach Anspruch 3, **dadurch gekennzeichnet, dass** das Aluminiumoxid γ-Aluminiumoxid ist.

5. Reaktor nach Anspruch 3 oder 4, **dadurch gekennzeichnet, dass** die Teilchen (10) aus Aluminiumoxid und Bariumtitanat zusammengesetzt sind.

6. Reaktor nach Anspruch 3 oder 4, **dadurch gekennzeichnet, dass** die Teilchen (10) aus Aluminiumoxid und Calciumtitanat zusammengesetzt sind.

7. Reaktor nach Anspruch 3 oder 4, **dadurch gekennzeichnet, dass** die Teilchen (10) aus Aluminiumoxid, Titandioxid und einem Zeolithen zusammengesetzt sind.

8. Reaktor nach einem der vorstehenden Ansprüche, **dadurch gekennzeichnet, dass** die Bindemittelmenge in den Teilchen (10) im Bereich von 20 bis 50 Vol.-% liegt.

9. Reaktor nach einem der vorstehenden Ansprüche, **dadurch gekennzeichnet, dass** er darauf ausgelegt ist, einen Teil des Auspuffsystems eines Verbrennungsmotors zu bilden.

## Revendications

1. Réacteur pour le traitement optimisé au plasma de milieux gazeux, comprenant un lit perméable au gaz (9) de matériau actif (10), des moyens (4, 5, 6, 7) pour contraindre un milieu gazeux à traiter à passer à travers le lit (9) de matériau actif (10) et des moyens (12, 13) pour appliquer à travers le lit (9) de matériau actif (10) une différence de potentiel suffisante pour établir une décharge gazeuse dans le milieu gazeux dans les interstices dans le lit (9) de matériau actif **caractérisé en ce que** le lit (9) de matériau actif (10) comprend une agglomération de particules (10) chacune desquelles comprend un matériau de mélange métal/oxyde diélectrique, défini comme un composé oxygéné avec deux métaux ou plus, adapté pour faciliter le traitement du milieu gazeux et au moins dix pour cent en masse d'un liant consistant en alumine également adapté pour faciliter le traitement du milieu gazeux.

2. Réacteur selon la revendication 1, **caractérisé en ce que** les particules (10) comprennent un troisième composant métal/oxyde.

3. Réacteur selon la revendication 1 ou la revendication 2, **caractérisé en ce que** les particules (10) sont composées de matériaux sélectionnés dans le groupe comprenant le titanate de baryum, le titanate de calcium, les zéolites et un mélange de zéolite/dioxyde de titane.

4. Réacteur selon la revendication 3, **caractérisé en ce que** l'alumine est un alumine γ.

5. Réacteur selon la revendication 3 ou la revendication 4, **caractérisé en ce que** les particules (10) sont composées d'alumine et de titanate de baryum.

6. Réacteur selon la revendication 3 ou la revendication 4, **caractérisé en ce que** les particules (10) sont composées d'alumine et de titanate de calcium.

7. Réacteur selon la revendication 3 ou la revendication 4, **caractérisé en ce que** les particules (10) sont composées d'alumine, de dioxyde de titane et d'une zéolite.

8. Réacteur selon l'une quelconque des revendications précédentes, **caractérisé en ce que** la quantité de liant dans les particules (10) se situe dans la plage de 20 à 50 pour cent en volume.

9. Réacteur selon l'une quelconque des revendications précédentes, **caractérisé en ce qu'**il est adapté pour faire partie du système d'échappement d'un moteur à combustion interne.
